Europäisches Patentamt

European Patent Office

Office européen des brevets

(11) Publication number: **0 333 459**
**A2**

# EUROPEAN PATENT APPLICATION

(21) Application number: **89302559.3**

(22) Date of filing: **15.03.89**

(51) Int. Cl.⁴: **G 07 C 9/00**

(30) Priority: **17.03.88 US 169285**    **17.03.88 US 169382**
**16.05.88 US 194199**

(43) Date of publication of application:
**20.09.89 Bulletin 89/38**

(84) Designated Contracting States:
**BE CH DE ES FR GB LI NL**

(71) Applicant: **UNITED MANUFACTURING CO., INC.**
**24 Blevins Drive**
**New Castle Delaware 19720 (US)**

(72) Inventor: **Linwood, Gary**
**6 Newbrook Road**
**Newark Delaware 19711 (US)**

**Duncan, Wayne**
**36 Shady Drive East**
**Newark Delaware 19713 (US)**

(74) Representative: **Thomson, Roger Bruce et al**
**POLLAK MERCER & TENCH Eastcheap House Central**
**Approach**
**Letchworth Hertfordshire SG6 3DS (GB)**

(54) Apparatus and method for position reporting.

(57) A system (10) for tracking individual subjects in a plurality of areas comprises a plurality of independent transmitters (A) with each transmitter having an individually characteristic infra-red radiation signal, a receiver (B) which converts the infra-red radiation signal into a digital signal, an identifying and validating member which operates on the digital signal and a recording member which records the location of an identified characteristic signal. A central processing unit (E) is utilised to accumulate recorded data on a plurality of locations. The transmitter used in the system for tracking individual subjects preferably includes a member for variably issuing electrical pulses within a predetermined time period, a light-sensitive member which varies in time the generation of an output in proportion to the intensity of visible light incident on the light-sensitive member and apparatus for applying the generated output to the member for variably issuing electrical pulses so that the generated output triggers the issuance of such pulses.

Fig.1.

EP 0 333 459 A2

Bundesdruckerei Berlin

**Description**

## APPARATUS AND METHOD FOR POSITION REPORTING

This invention generally relates to tracking systems for identifying the position of independent subjects within designated areas or zones, and more particularly to the remote monitoring and identification of independent subjects within several designated areas of a larger structure. The present invention also relates to devices for accumulating and processing location information in a centralized processor common to a plurality of subjects, and to controlling a uniquely coded transmitted signal which identifies the sending transmitter in distinction from similar devices, which may be within a common area and transmitting to a common receiver.

### BACKGROUND OF THE INVENTION

Systems are available for determining the locations of several persons within a multi-area structure. Systems have been proposed in which portable transmitters emit coded signals in predetermined intervals to a central receiving station so as to identify the sending portable transmitter. However, such systems have certain drawbacks and deficiencies, such as requiring a transmission from the receiving station to the portable transmitter. Also such systems are complicated and would require cumbersome apparatus.

Proximity monitoring systems for persons or objects have been provided which comprise a transmitter and receiver for position reporting. These systems are deficient in their inability to process a plurality of signals from multiple units in a limited area, particularly in a short time span. With substantially simultaneous multiple transmissions to a common receiver signal "collisions" can occur which hinder or defeat the desired identification of the transmitters. Additionally, the actuating means which trigger the transmission of identifying signals from these transmitters are operated by means which are occasional in nature. For example, various previous systems which transmit a coded RF signal are actuated by a mechanical-type of operation, such as a switch actuated by a coded card or detection unit such as a peripheral intrusion detector. These triggering means fail to provide a continuous, and regularly present, triggering means which is also variable.

### SUMMARY OF THE INVENTION

This is an identification system employing infra-red radiation for communication within the system. The communication means are a plurality of individually independent transmitters each issuing a distinctive signal in infra-red (IR) radiation. One or more of these IR transmitters are associated with subjects which are movably positioned in one or more monitored areas or zones. It is a feature of the present system that simultaneous multiple transmissions are possible so that the single system can process the information from several locations and formulate it into a single serial data stream in a central processing unit.

Specifically, an identification means is provided for communication from one or more transmitters associated within the system and movably positioned with respect to each other. It is a feature of the present system that multiple transmissions are possible from a plurality of transmitters so that the single system can process the information from several transmitters.

Each transmitter operates to cyclically issue a distinct signal in cycles of significantly variable duration and within a finite time period. The beginning of the signal and the duration of the cycle is varied by the intensity of the incident light that is a variation from dark to light on a photosensitive component such as a photodiode.

In one embodiment a transmitter provides a clock signal which times the sequencing of pulses to a memory to produce a characteristic binary number for transmission to a receiver. The binary numbers are produced by transition from high to low which produce bits. The transition is an on-off phenomenon, like Morse Code.

It is a feature that by this invention a plurality of independent transmitters may be programmed to transmit distinctive signals within a comparable time cycle and may be actuated to initiate the transmission of the signals at different segments within the time cycle as a result of variations in the intensity of incident light on the various individual transmitters.

The system is comprised of a central processing unit and a data processor, which feeds serial data on one or more subjects to the CPU. The data on the subjects originates in IR transmitters, for example as a badge carried on the person and from a location remote to CPU and data processor. The transmitter provides a clock signal which times the sequencing of pulses to produce a characteristic binary number, which in turn is transmitted by a light emitting diode in infra-red radiation to a fixed sensor. The sensor on receiving the radiation converts it to electrical signals of ones and zeros and processes the data in a processing unit to identify and validate the characteristic binary number as valid and attributable to a designated transmitter.

The characteristic binary numbers are sent to the central processing unit through the data processor which formulates the bits for processing of the information in the CPU.

In the system of the present invention the uniquely distinctive binary coded characters are transmitted from individually independent portable transmitters by IR radiation to one or more receivers in a receiver network. Data processing means in the receiver network identifies and validates the received binary coded character by comparison with stored reference data. The data from the plurality of transmitters is processed through the data processors and all of the data from the individual transmitters is stored together in an array in a main central processing unit. The accumulated data in the main CPU is available for further processing such as identification of the location of the individual transmitters, statistical analysis and printouts.

Thus this system provides a plurality of individually independent and therefore autonomous portable transmitters capable of readily changing position within a plurality of areas each of which emits a unique code and the plurality of transmissions are processed after validation and stored together in an array from which accumulation the coded data is available for use in many tasks of computations.

BRIEF DESCRIPTION OF THE DRAWINGS

The principles and above mentioned advantages and objects of the present invention will be better understood upon reading of the following description together with the accompanying drawings in which:

Figure 1 is a functional block diagram of the system of the present invention;

Figure 2 is a functional block diagram of a transmitter of the system shown in Figure 1 according to the present invention;

Figure 3 is a timing diagram showing the cycle of operation and the transmission intervals of the bi-phase method for data formation and graphs of the relevant functions in this method;

Figure 4 is a functional block diagram of a receiver of the system shown in Figure 1 according to the present invention;

Figure 5 is a functional block diagram of a plurality of receiver stations and data processors and a central processing unit of the system of Figure 1 according to this invention;

Figure 6A, 6B and 7 are flow charts diagramming an operation of the system;

Figure 8 is a schematic diagram of a circuit in the transmitter providing the triggering impulses which initiate the functions of the transmitter; and

Figure 9 is a chart illustrating the relationship between an active interval of signal transmission and a cycle of the system.

DEFINITIONS

The following are definitions of terms as used herein;

Comparator - a unit that compares two binary numbers telling whether the numbers are equal, greater than or less than.

Counter- a special kind of register made up of flip-flop circuits with one input and usually an output from each flip-flop, which counts pulses arriving at the input and stores the total count in a certain code (usually binary numbers).

Clock input - an input terminal on a unit typically used for receiving a timing control-clock signal, but used in some applications for a control signal or even data.

Programmable - a circuit which can be set with a fixed program.

Cycle - an interval of space or time in which one set of events or phenomena is completed.

Code - a set of meanings assigned to groups of bits made up of binary representations or binary states provided by a sequence of high and low voltage areas.

Character - symbol used as part of organization, control or representation of data.

Binary Number - number using base 2 and consisting of the digits 0 and 1.

Bit - a 0 or a 1.

Clock - a circuit that generates a series of evenly spaced pulses and in a microprocessor causes the microprocessor to proceed from one step to the next in executing instructions.

DETAILED DESCRIPTION OF THE PREFERRED EMBODIMENT

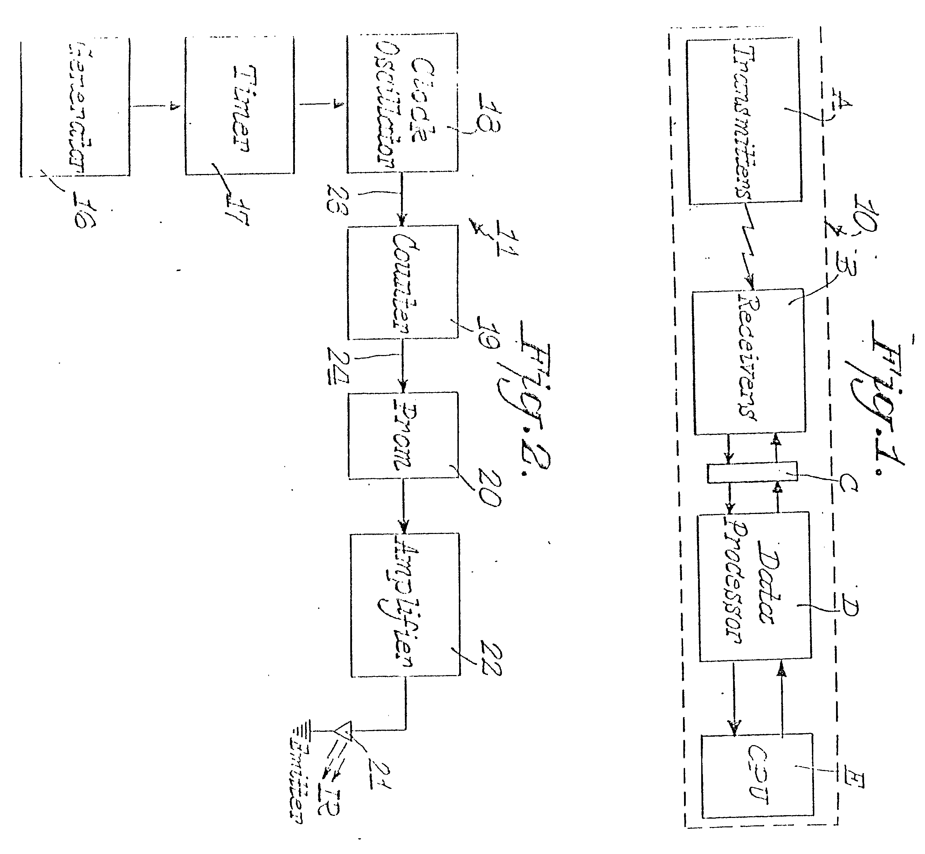

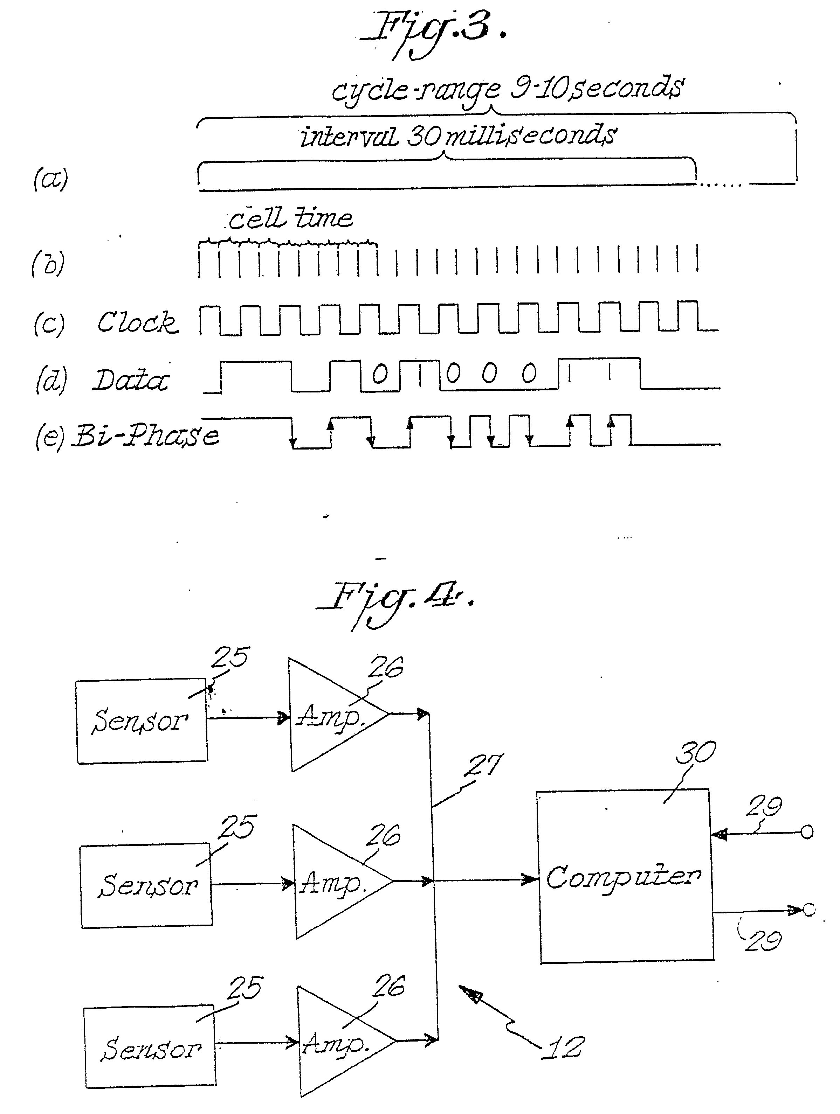

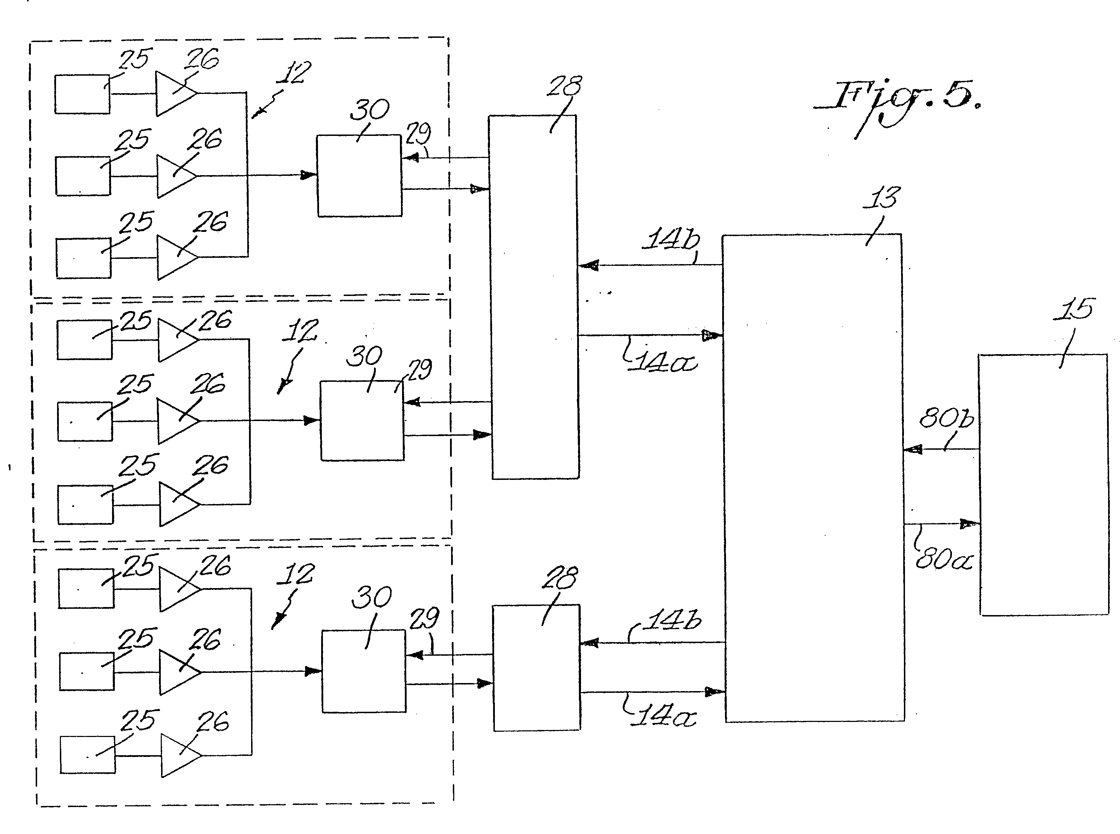

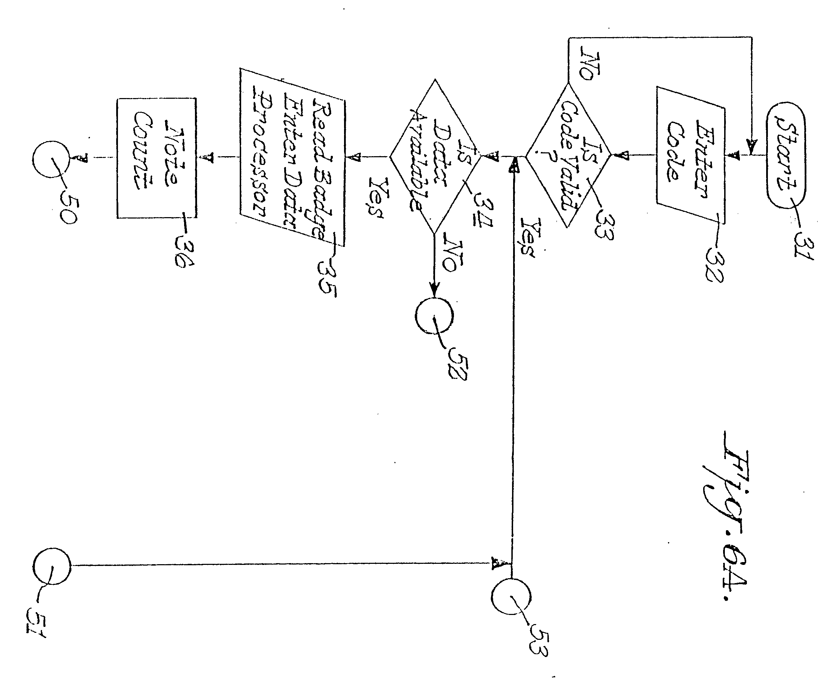

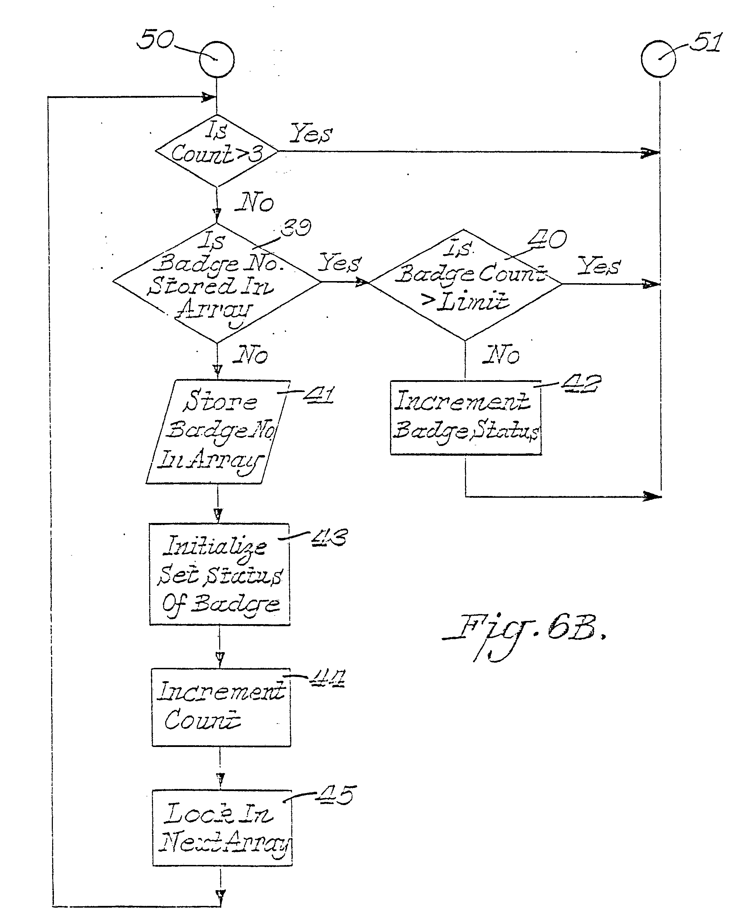

Referring first to Figure 1, a system 10 of the present invention is illustrated with a block A representing two or more transmitter assemblies 11 (Fig. 2), a block B representing at least one receiver assembly 12 (Fig. 4) a block C representing one or more multiplexers 28 (Fig. 5) at least one data processor stage 13 represented by block D which is connected to a central processing (CPU) unit 15 represented by block E. Stated briefly, in an arrangement of these parts the transmitters 11 are independent and portable such as a badge, and in use are associated primarily with subjects. One or more receivers 12 are each located in a designated area or zone so that within this zone one or more transmitters and their associated subjects within the transmission range are identified by the operation of the system through the respective receiver 12. The data processor 13 receives a data signal from the receivers 12 through the interface of multiplexer 28 and sends signals to and receives signals from the CPU 15.

The system 10 provides a network which operates to monitor and identify from a remote location the positioning and location of one or more subjects within one or more designated zones. The transmitters 11 in a preferred embodiment, are badge-size infra-red radiation emitting transmitters. A coded binary number code is produced in each transmitter 11. The infra-red radiation from the transmittal stage sends an identifying signal representative of a transmitter 11 to the receiver 12. This identifying signal is an infra-red radiation signal in the form of the coded binary number code produced by the respective individual transmitter 11.

Figure 2 illustrates in a block diagram a typical transmitter assembly 11 of the transmitter stage illustrated in Figure 1. In one embodiment this is a pocket-sized device passively carried by each individual subject being monitored by the system. The assembly includes a random time variable generator 16 which provides a signal to a timer 17 and which in turn initiates operation of the transmitter assembly 11.

The initiation of the timer 17 is controlled by generator 16 and the operation of a voltage level provided by light incident on the assembly. The timing of the occurrence of the signal from the generator 16 is proportional to the incident light. Thus the generator introduces a random time variable resulting from the conventional variations in ambient light in the area. The timer 17 periodically creates the cycle of pulses of the assembly by sending out a periodic pulse.

The periodic pulse from timer 17 is set to occur at predetermined points in time, such as once every ten seconds, and thus define a cycle. In the present embodiment the timing of the frequency of the pulse can be varied over a range of from once every second to once every ten seconds with commensurate cycle duration. The timer 17 actuates a clock oscillator 18 in each cycle. The clock oscillator 18 is gated by the pulses from its clock to provide sequencing of counter 19 associated with a programmable read-only-memory 20, hereinafter referred to as PROM 20. PROM 20 is programmed with a specific bit pattern which will generate a unique code in a binary number to be transmitted from the transmitter 11. The coded word is in the form of a binary number. The binary character is stored in memory by the program in the PROM 20 to identify the individual transmitter assembly. The PROM 20 is provided with means for easily programming into the PROM 20 an individual and unique code for the respective transmitter assembly 11.

The characteristic binary number of the transmitter unique code is read out of the memory by the sequencing of the memory addresses by the counter. The counter 19 and the PROM 20 when energized by the pulses from the clock oscillator 18 progress through the active interval, 30 milliseconds in the preferred embodiment and then shuts off. The cycle continues for the remainder of the ten second period. This binary number is transmitted to an IR emitter 21 through suitable amplifier 22. The IR emitter 21 which is driven by transistors in the amplifier 22 converts the electrical signals making up the code of the binary numbers into signals of infra-red radiation. This signal emission from the IR emitter 21 is in a wavelength of from 900 to 10,000 nanometers and an illustrative pulsing frequency is 1.2 milliseconds or 833 pulses/second. The binary numbers making up the binary character are formed by changes in state.

Data is transmitted as a fixed-length stream of binary digits (bits) concatenated to form one or more binary characters. Each bit is weighted according to its position within a character in binary fashion. The bit length is defined by the "bit cell" time which is nominally 1200 microseconds. Data is encoded in a so-called bi-phase which is defined as follows:

A binary "1" or "high" bit is represented by a transition of the signal level from a "0" or low voltage level to a "1" or high voltage level at the nominal center of a bit cell.

A binary "0" or low bit is represented by a transition of the signal level from a "1" or high voltage level to a "0" or low voltage level at the nominal center of a bit cell.

The transmitter utilizes an amplitude-shift-keyed modulation technique with a nominal carrier frequency of 38 kilohertz and a data rate of 833 hertz. A logical "0" and a logical "1" are defined by the modulation of the carrier.

In the preferred embodiment, zeroes and ones are transmitted by the radiation from emitter 21 in on-and-off pulses of the infra-red radiation emitting from emitter 21.

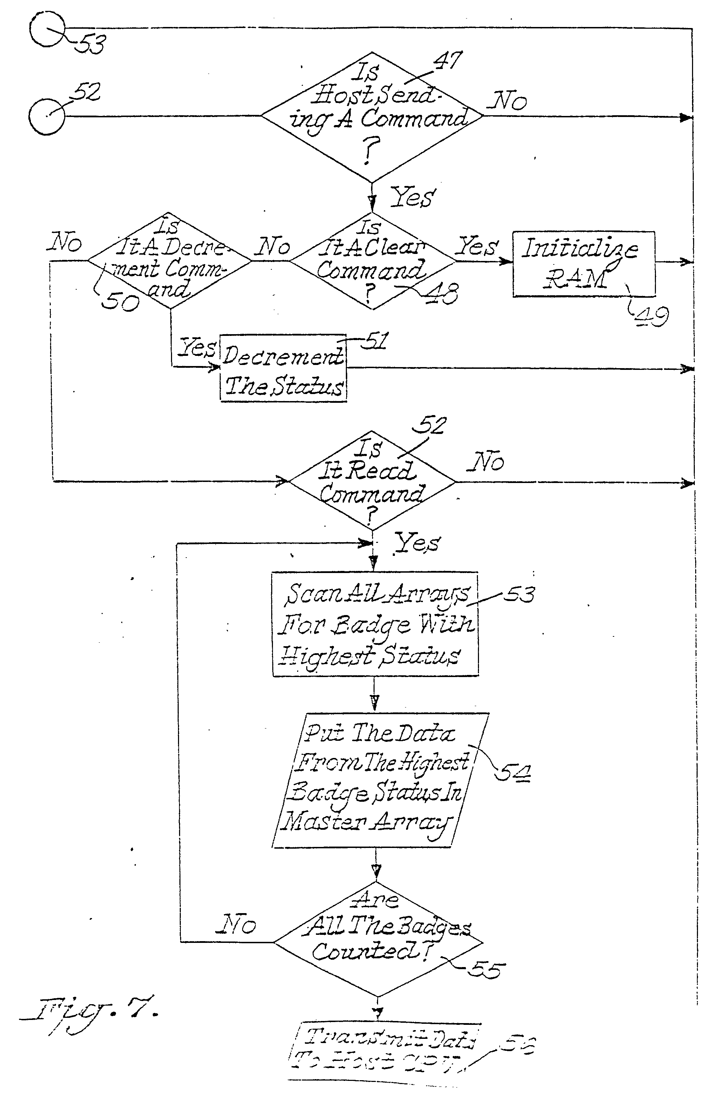

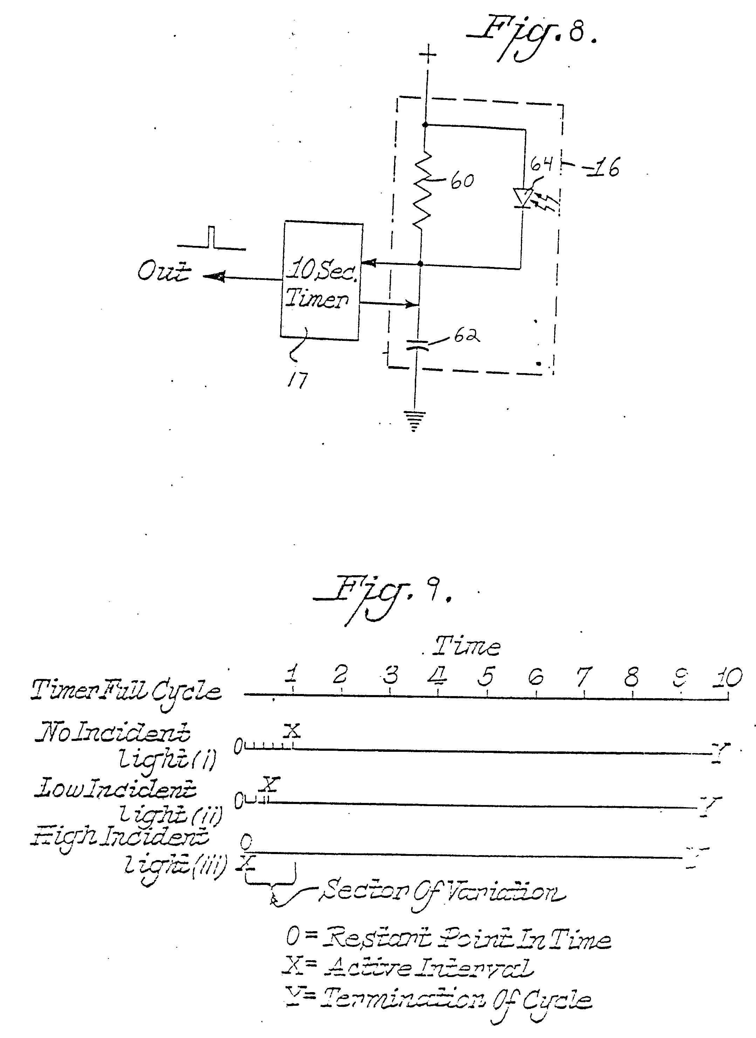

Generator 16 is described in greater detail below in relation to Figure 8.

Referring to Figure 3 this is a diagram charting graphs of the pulses in an active interval in a transmission cycle of the transmitter 11 assembly which occur upon actuation of the timer 17 by the operation of a voltage level in the variable time generator 16. It will be readily understood that this active interval as described herein is representative of the actuation in any one of a plurality of transmitter assemblies which are coded with similar cycles of transmission of uniquely coded characters to a common receiver, as explained in greater detail below. The active interval makes up the part of recurring transmission cycle. In this active interval the assembly produces and sends coded characters. With the actuation in the generator 16 of an enabling current and a triggering of the transmission cycle and of the active interval, the timer 12 pulses the clock and these clock pulses are delivered to the oscillator 18. The clock pulses span the active interval. The oscillator 18 initiates and sustains a carrier frequency delivered. These clock pulses are delivered from the oscillator 18 to the counter 18 on line 23. In the present embodiment a suitable carrier frequency is 38 Kc. The counter 19 provides an output in the active interval over address lines 24 to the PROM 20.

The signals from the counter 19 sequence the addresses of the PROM 20 to read out the data stored in the addresses by the programming of the PROM 20. A carrier frequency is provided in the PROM 20 for providing the data carrying bits. Each pulse from counter 19 is related to modulation of the carrier frequency. As noted above, the data is ones and zeroes as encoded by transitions. The data in the addresses is written out by transitions of signal levels from high or lo of vice-versa.

The radiation is received by a receiver 12 as shown in Figure 1. This radiation from the transmitters 11 is received by senors 25 in the receiver assembly 12 which are shown in Figure 4. According to this invention the receiver 12 may have several sensors 25. As illustrated in Figure 4 the receiver 12 has three sensors 25 each connected through amplifiers 26 into a bus 27 which connects to a receiver computer 30. Typically one receiver 12 with its computer 30 and attendant sensors 25 and amplifiers 26 service and receive transmissions from a plurality of transmitters 11 in a designated zone. The program in the computer 30 decodes the binary numbered code and validates the code by comparison with information stored in the computer 30 memory.

The receiver assembly 12 by operation of the program in the computer 30 receives, synchronizes and decodes the transmitted data from each of the transmitters 12 in the designated area. The decoded data is relayed to the data processor 13.

The data is stored in the memory of the main computer 15 until software routines call for the data to be utilized in subsequent operations.

The sensors 25 detect infra-red signals within a receiver band pass for the radiation. The amplifiers 26 amplify the detected coded binary number and the computer 30 converts the encoded bit stream to a binary non-return-to zero bit stream and also provides synchronizing clock signal.

The computer 30 sends out a pulse to the data processor 13 on line 38 indicating a binary number identifying code for transmission. The processor 13 returns a clock pulse on line 29 to the computer 30. The computer 30 then sends the converted serial data stream to the processor 13, as shown in Figure 5.

The data processor 13 accepts serial data streams from a plurality of receivers 12. The multiple receiver data streams are processed in the processor 13. For example, the codes are validated by comparison with information programmed into the computer memory. The multiple receiver data stream are combined into a single standard data stream so as to be compatible with processing in the CPU 15. This data stream is transmitted to the CPU 15 on line 27.

In Figure 5 a functional block diagram illustrates a representative system according to the present invention in which three receiver assemblies 12 are defined by broken lines. Each of the three assemblies 12 contains sensors 25 and amplifiers 26 connected to its respective computer 30. Each receiver 12 is connected to a multiplexer 28 by lines 29a and 29b which are illustrative of the two way transmission between receivers 12 and the processing of the data in the data processors 13 and the host CPU 15. The multiplexers 28 provide the interface between the receivers 12 and the data processor 13. It will be readily understood that the multiple receivers 12 illustrated in Figure 5 are representative of the variable number of receivers 12 which may be assembled in the system 10 according to the present invention. Further, as shown in Figure 5, one or more receivers 12 may be connected to one or more multiplexers 28 by the respective lines 29a and 29b. In turn, the multiplexers 28 are connected to the data processor 13. As explained in greater detail below under the program of the system 10 the data processor 13 processes the data initially generated at the transmitters 11 and transmitted by IR to the receiver 12.

The data processor 13 handles the data from the receivers 12 passed by means of multiplexers 28. As described above and explained in greater detail below the data processor is connected to the main or host CPU 15 by lines 80a and 80b for transmitting data to the CPU 15 and receiving commands from the CPU 15.

As shown in Fig. 4, the CPU 15 typically receives data from more than one data processor 13 and accordingly handles a large number of transmitters from one up to several designated zones. In one embodiment the CPU 15 handles from 25 to 300 received assemblies and a consequently larger number of transmitters. The CPU 15 removes false data and changes the validated code data.

In the timing diagram of Fig. 3, the uppermost graph (a) illustrates the cycle of transmission and the active interval within the cycle. The cycle is represented as 10 seconds in length and the active interval 30 milliseconds. The next graph (b) illustrates the individual cell times of 1.2 milliseconds each. Thus in the embodiment the 30 millisecond active interval is made up of 25 cells, which define the bit lengths. The cell times represent the timing in the formulating and transmission of the binary characters.

The graph (c) represents the train of clock pulses which as the diagram of Fig. 3 shows are synchronized with the cell times. Accordingly, in the embodiment of this detailed description, the active interval has 13 pulses separated by 12 spacing interims to equal the 25 cell times of the illustrated active interval. Graph (d) illustrates the bits representing a binary character consisting a string of ones and zeroes. Graph (e) illustrates in a graphic manner the charge states of the circuitry in the PROM 20 in accordance with the coded bi-phase data which in turn provide the binary code of the binary characters illustrated in graph (d). The vertical lines carrying arrows represent transitions of signal level. The horizontal lines represent states of voltage level. The upward pointing arrows signify a transition from low voltage level to high voltage level and the downward pointing arrows vice versa; correspondingly the upper horizontal lines in the cell times represent "ones" or "1" and the lower horizontal lines in a cell times represent "zeroes" or "0". The transitions are peculiar to the coded characteristic binary number of the individual transmitter assembly 11. They are produced by the data read out of the PROM 20 addresses as the counter 14 sequences the data containing addresses in the PROm 20. Thus, it is seen that the coded data programmed into the PROM 20 of an individual transmitter 11 is read out to make up the characteristic coded binary number of the individual transmitter 11. As described above, these signals suitably amplified are sent out from IR emitter for reception and detection, as in the receiver 12.

This reading out and sending of the IR radiation occurs during the active interval illustrated in graph (a) of Fig. 3. Thus transmission occupies a minor sector of the transmission cycle. The relative greater length of the time of the cycle accommodates variations of the timing of the active interval within the cycle.

Each receiver 12 constantly monitors the output of its sensors 25 in the receiver computer 30 waiting for a transition in voltage level which may indicate the start of a transmission from one of the transmitters 11 in an area monitored by the receiver 12. To identify the initiation of such a transmission the code provides a characteristic bit signal. As illustrated in the data graph (d) of Fig. 3 the first bit is 3 milliseconds long. The computer 30 is programmed to recognize this as identifying the start of the transmission of a coded binary number, which follows as illustrated in graph (d) of Fig. 3. The receiver 12 then reads in the bits from a transmitter 11 which make up the unique binary number.

The computer 30 on receiving the characteristic bits identifies the ccde number being transmitted. When the coded binary number has been assembled in the computer 30 it is ready for validation by a comparison. The matching code number is read in from the computer memory. In one comparison method the data from the transmitter 11 is read into a register A and the data from memory into a register B. After the values are entered a comparison of the values is made by subtraction. If a match of values is indicated the receiver 12 recognizes the transmission as a valid one. The receiver 12 goes through isolation to report to the main CPU 15 through the data processor that a value data transmission has been made.

As indicated by the graph of Fig. 3 the clocking is encoded with the data. At the receiver the bits of the transmission are synchronized by computer 30 so that the receiver 12 locks on to the transmission.

The signal carrying the binary number is transmitted from the receiver 12 to the data processor 13. The computer of the data processor 13 constantly monitors all receivers 12 connected to it. When any one of the receivers signals that it has a badge code, the data processor 12 computer reads that code from the receiver and stores it in RAM memory. All transmissions from receivers are stored together this way in a large array. The data processor 13 is also continuously watching for a signal from the main CPU which will indicate a request for the data which has been accumulated.

The main CPU 15 cycles through several different tasks. The only task that is required for system operation is the requesting from the data processing computer, the data processing computer sends the entire array of data back to the main CPU 15. At this point, anything may be done with the data that the use requires.

In the operation of the present invention the accumulation of data relating to a number of subjects is possible. An advantage of the invention is a constant monitoring of a number of transmitters which are positioned both in common areas and in separate areas and which are portable and not mechanically attached to the receiver but are individually independent.

The operational sequence of the system is illustrated by the flow sheet of Fig. 6. The initiation of the operation as represented by the oval 31. The transmitted assemblies 11 and the receiver assemblies 12 are energized; this function is indicated diagrammatically by oval 31. The circuitry is now prepared for the transmission and entry of badge numbers associated with the transmitter assemblies 11 to identify the location of subjects. The entry of a badge number by the transmission of a coded binary number code for a transmitter 11 to a receiver 12 is represented in the flow chart by the parallelogram 32.

This actuation of a number code by a transmitter 11 for transmission leads to the determination whether the actuation is of a number code of the system. This decision point is represented by the diamond 33. The determination is made by the procedures described herein. For example, the characteristic binary number issued from an emitter 21 is converted into electrical signals in the binary of ones and zeroes and the data processed and validated as an authentic binary number by comparison with stored data. It is representative of the multiple actuations and transmissions from the several transmitters 11 of the system, during the monitoring operation.

The negative branch of the diamond 33 carries the identification process back to the actuation of another transmission.

The affirmative branch of the diamond 33 carries the operation of sensing the presence of badge numbers in one or more receivers 12 available for a data processor 13. This determination is represented by the diamond 34 where the question "data available" is conducted by the program. The affirmative branch leads to the program reading a badge number from the receiver 12 into the data processor 13 as represented by parallelogram 35. In reference to the identification of one such located badge number and its subject and the room in which it is located the program procedure can be described as follows. The program recognized the last four areas in which the badge number has been located. As to that selected group of areas the system through the program updates the locating of the badge number. The program processes and records each identified and processed badge number within this selected number of areas with the following operations as illustrated by the flow chart of Fig. 6.

Upon the locating of an available badge number in a receiver 12 and the reading of the badge number into the data processor, as mentioned above and as represented by parallelogram 35 the program. This followed by a procedure which calls for scanning the four areas for identification and location and/or relocation of the located badge number, and its accompanying subject, in these four areas. Consequently, the next step in the program is noting the count of identification of the badge number in the data processor, i.e. initializing the array pointer or variable N. This is represented by block 36.

The count having been established. The next step is the determination whether the area scan associated with the locating procedure for this badge number has inspected more than four areas. This is represented by the diamond 38; note 0 counts as 1.

If the counts of the areas is greater than 3 the processing loops back to seeking data from the receiver 12 stage. This means that the scan procedure of the selected group has run its course. If the count number of inspected areas is not greater than 3 the procedure branches to the procedure for storing the badge number in the array correlated to the area, i.e. room, in which the badge has been located and identified. The first step in this procedure is the determination of whether the identified badge number is in the first area. This is for the purpose of determining if the badge number is to be stored in the correlated array of the area. This determination is represented by the diamond 39. An affirmative carries the procedure to the determination of whether the number of identifications of the badge within the identified array is within a set limit, of seven for example. This is represented by the diamond 40. If the determination is that less than the limit of the particular badge number has been counted the procedure branches to block 41 representing the storage of the badge number in the correlated array represented by parallelogram and noting the total number of identifications of the specific badge number as represented by block 42. The steps then proceed to looping back to seeking data from the receivers 12 for entry into the data processor 13.

If the count of the badge number as determined in diamond 40 shows the count of identifications of the specific badge over the limit, then, through the negative branch from diamond 40, the procedure loops back immediately to the scan for data from the receivers 12.

If the determination at diamond 39 is that the badge number is not in the first of the designated areas then the program increments the count of the areas inspected as represented by block 43. This records in the host CPU 15 that one of the four areas has been inspected. Then having failed to find the badge number in that inspected area, the scanning procedure calls for looking for the located badge number in the next designated area as represented by the block 44. This leads to looping to the determination whether the locating procedure of this specific badge has inspected more than four areas in the determination of diamond 38 and the procedure described above associated therewith. A negative determination branches to the question as represented by diamond 39. If the count of areas is greater than 3 stated otherwise, if four areas have already been inspected, an affirmative results indicating that the scanning step of the group of areas is fulfilled. Then as with an negative from diamond 40 the processing loops back to seeking data from the receiver stage 12.

The negative branch from diamond 38 carries the procedure to inspecting the next designated area and a repetition of the determination in diamond 39 and diamonds 40.

This is the program of entering the badge number in an address of the correlated array. This is represented by parallelogram 41. Proceeding to the steps represented by block 42, the program notes the status of the identified badge in the relevant array and enters it as a count of 1. The program proceeds to incrementing and looping back to scan for data in the receivers 12.

This programmed procedure as outlined above in relation to a badge number identified in one of the monitored areas, i.e. rooms etc. is typical as an example of the tasks performed by the program of the present invention. Thus it will be seen that the program operates to process the identified badge numbers in the monitored areas by first entering the badge number in an address in an array associated with the area where the badge number was identified and then counting and tallying the number of identifications of the badge number in the respective arrays until the limit for the particular badge is attained. Also the program monitors, records and processes in each 10 second cycle the history of each specific badge for the last four areas scanned. When the set limit for locating monitored areas has been reached for all four monitored areas of the sweep, the storing of the badge number is discontinued and in subsequent identification the program loops back through the affirmative branch of diamond 38.

Referring to Fig. 7, when the data processor is not receiving data from the receivers the program branches to check for commands from the main CPU 15. The following steps involve commands from the host CPU 15 which process information on the location of the badges.

The processing identifies commands and executes functions in accordance therewith. Fig. 7 illustrates such procedures. The first determination is represented by the diamond 47 to which the program branches via the connector 45 with the question, is the CPU 15 sending a command as shown in diamond 47. The negative branch from diamond 47 carries the program back to seeking data from the receivers.

The affirmative branch carries the system to the reception and execution of commands in the program. The next determination is whether there is a CLEAR command as represented by the diamond 48. The affirmative branch from diamond 48 indicating a CLEAR command leads to initializing all the arrays which is a removal or clearing of all data from all the arrays, represented by block 49.

Each array has two halves. One half records the area where the badge is located, the other half keeps track of the count of the identification of the badge.

The negative branch from the diamond 48 indicates that in this time in the procedure the badge is being monitored rather than being stored.

For the purpose of this specific example, in this operation the host CPU 15 is assumed to scan the array every 10 seconds. The command to decrement occurs normally once every cycle. When executed, the command decrements the status of all badges downward. This is represented by block 51. In one embodiment a count 1 is subtracted from all counts in the four arrays of the four areas under inspection at that time.

A negative response in diamond 50 branches to the next determination is these a READ command. This is represented by diamond 52. An affirmative response leads to the function of scanning block 53, all the arrays are scanned for the one having the highest badge status and putting it in a fifth or master array, parallelogram 54. After the master array has been updated the data is transmitted to the host CPU 15 as represented by parallelogram 55. Upon completion of the transfer to the host CPU 15 the next determination is whether all of the badges in the system have been check as represented by diamond 56. The negative branches loops back to block 53 and scanning the arrays for the badge with the highest count. The affirmative branch loops to connector 46 and seeking data from the receiver 12.

Figure 8 illustrates an embodiment of a variable time generator 16 according to this invention. In this embodiment of the means for varying the initiation of the periodic pulse variations in the level of light on a photodiode varies the level of current flowing through the component so that an increase in illumination increases the current and vice-versa. In the specific embodiment of the generator 16 described herein and R/C circuit has a resistance 60, a capacitor 62 and a photodiode 64 in parallel across the resistance 60. Upon an increase of current across the photodiode 64 capacitor 62 is charged to a voltage level at which the timer 17 is actuated to vary the timing of the initiation of the transmission cycle. Thus, the operation of the generator in producing a voltage level which actuates timer 17 is provided by current from the photodiode 64.

Figure 9 is a chart illustrating this shifting of the active interval within the overall transmission cycle as related to the intensity of light incident on the variable time generator 16.

According to the present embodiment the timer 17 is adjusted to run for nine seconds after actuation. The timer 17 is designed to be actuated by a voltage charge from the capacitor 62 during the first second of each ten second cycle. At the end of the first second the time enabling pulse to clock oscillator 18 is automatically generated within the timer 17.

In Figure 9 the bar (i) represents the plotted against time transmission cycle when there is no light incident on the generator 16. The cycle starts at the symbol 0 but the timer 17 does not issue the enabling pulse to clock oscillator until the end of the first second. The bar (ii) represents the transmission cycle with low intensity light on the generator 16. The charging of the generator 16 causes the timer 17 to issue the enabling pulse after about 1/2 second. The bar (iii) represents the transmission cycle with high intensity light on the generator 16.

The variable time generator 16 produces an analog signal with a value change in the time of voltage build-up proportional to variations of the intensity of the incident light on the photosensitive element of the generator 16. The incident light is generally intrinsic to or derived from the particular area in which the particular transmitter is located but can as well be the result of some specified light source. According to this invention normal or conventional variations in light intensity within a defined area are adequate to result in value changes in the timing of the analog signal. In the preferred embodiment, this is a change in the period of voltage build-up. The analog signal is converted to a pulse which enables a digital operation of the PROM 20. After the conversion takes place the transmission of the characteristic binary number is obtained.

It will be understood that while the preferred embodiment described herein uses a change in analog voltage to determine the timing of the signal from the incident light, other analog means responding to variations in light within a given area may be employed for determining the timing of the analog signal.

From the foregoing, various advantages will be seen. For example, a random time variable is provided to the transmittal of the preselected code. The transmitter can transmit one of several codes in a cycle of once very few seconds, a 1 to 10 range in this embodiment. The random time variable, in causing the active interval vary some small amount in the cycle, for example 0.1 second, randomizes the transmission and makes the transmission form the individual and independent transmitter distinctive.

With respect to the embodiments of the invention described herein, it should be understood that where not shown power supplies are provided having the correct polarities and magnitudes for supplying electrical energy for operating the described circuitry.

Various modifications or additions may be made to the embodiments described hereinabove according to the invention without departing from the scope as defined by the accompanying claims.

## Claims

1. A system for tracking subjects in a plurality of areas by independent transmission of signals capable of employing infra-red radiation for multiple transmission from several locations to a processing unit characterised by:
a plurality of independent transmission means issuing individually characteristic signals by IR radiation to a receiver,
means for converting the IR radiation into characteristic digital signals,
means for identifying and validating the individually characteristic signals,
and means for recording a location of an identified characteristic signal.

2. A system as claimed in claim 1, characterised by means for accumulating recorded data on a plurality of said locations in a central processing unit, whereby data from a plurality of transmission is stored.

3. A system as claimed in claim 1 or 2, characterised by means for comparison with stored data.

4. A system as claimed in claim 1, 2 or 3, characterised in that the plurality of transmission means each issue an individually unique code transmittable by IR radiation and by digital signals upon conversion from IR radiation.

5. A system as claimed in any preceding claim, characterised in that said independent transmission means is a portable device associatable with an individual subject.

6. A system as claimed in any preceding claim, characterised in that the plurality of independent transmission means transmit radiation to at least two receivers and each of said receivers receives transmissions from transmission means in a designated area for monitoring.

7. A system as claimed in any preceding claim, characterised in that said means for recording comprises a central processing unit and a data interface having means for transmitting data to said central processing unit; and characterised in that said means for identifying comprises means for comparing the decoded binary number and identifying the characteristic binary number;

and characterised by means for transmitting signals carrying the identified binary number to the data interface;

said data interface having means for formatting the identified binary number and delivering the formatted binary number to the central processing unit.

8. A system as claimed in claim 7, characterised in that said independent transmission means includes means for reading said characteristic signals from a memory so that the timing of reading out the characteristic signals is varied by means of a varying light level in the designated zone.

9. A system as claimed in claim 7 or 8, characterised in that the characteristic signals are a bit sequence and in that the means for converting synchronizes to the characteristic signals and locks onto the bit sequence.

10. A system as claimed in claim 7, 8 or 9, characterised in that the system is capable of identifying a plurality of characteristic binary numbers.

11. A system as claimed in any of claims 7 to 10, characterised in that the data interface is an optical isolation interface.

12. A method of identifying the location of a plurality of individuals within a plurality of areas comprising the steps of:

issuing IR radiation individually independent transmission with distinctive signals from individual transmission means associated with a plurality of individual subjects;

receiving the IR radiation on at least one sensor;

converting the IR radiation to individually distinctive digital signals;

comparing said distinctive signals with stored data to validate the association of a transmission means and an individual subject; and

entering the digital signals into a central processing unit by means of a data processor.

13. A method as claimed in claim 12, characterised in that the digital signals are characteristic binary numbers.

14. A method as claimed in claim 12 or 13, characterised by the steps of storing information of the digital signals in an array,

and determining the location of the individual subjects with the stored information.

15. A control apparatus comprising

means for variably issuing electrical pulses at an output terminal within a predetermined time period,

a light-sensitive means for varying in time the generation of an output in proportion to the intensity of visible light incident on the light-sensitive means,

and means for applying said generated output to said means for variably issuing pulses and triggering the issuance of said pulses.

16. A control apparatus as claimed in claim 15, characterised in that an output voltage is varied in time in proportion to the incident light.

17. A control apparatus as claimed in claim 15 or 16, characterised in that an RC circuit on a photodiode provides the output voltage.

18. A control apparatus as claimed in claim 15, 16 or 17, further characterised by a read-only memory means for storing a code in binary, means associated with an oscillator for providing a train of clock pulses actuated by an enabling pulse and adapted to sequence a counter in said read-only memory means, said counter sequencing addresses of said memory means for supplying said stored code in binary information modulated on a carrier frequency to read out the data stored in the addresses; and means for transmitting the binary information to means for converting the electrical signal into signals for electromagnetic radiation.

19. A control apparatus as claimed in claim 18, characterised in that the electromagnetic radiation is infra-red radiation.

20. A control apparatus as claimed in any of claims 15 to 19, characterised in that the predetermined time period is in the range of one to ten seconds.

21. A control apparatus as claimed in claim 18 or 19, characterised in that said sequencing of addresses occurs in an interval of 30 milliseconds within said predetermined time period.

22. A method of providing variable timing in the transmission of electromagnetic radiation from an individually independent transmitter of electromagnetic radiation,

said method comprising the steps of:

generating the output from a photosensitive circuit so as to be variable in time in proportion to the intensity of light incident on the photosensitive circuit,

triggering an electrical pulse from a pulse-issuing timer within a predetermined time period with the output of the photosensitive circuit,

actuating an oscillator with said issued pulses,

producing a train of clock pulses from said oscillator,

sequencing addresses in a read-only-memory upon applying said train of clock pulses to said read-only memory to supply a code in binary information,

transmitting said binary information to a light emitting diode,

and converting the binary information into electromagnetic radiation.

# Fig.1.

# Fig.2.

# Fig.3.

cycle-range 9-10 seconds

interval 30 milliseconds

(a)

cell time

(b)

(c) Clock

(d) Data          0    0  0  0      |    |

(e) Bi-Phase

# Fig.4.

Sensor 25 → Amp. 26

Sensor 25 → Amp. 26 → 27

Sensor 25 → Amp. 26

Computer 30 ← 29

29

12

EP 0 333 459 A2

Fig. 5.

Fig. 6A.

```
        ( Start )——31
            │
   ┌────────▼
   │    ┌─────────┐
   │    │  Enter  │——32
   │    │  Code   │
   │    └────┬────┘
   │         │
   │        ◇◇◇  33
  No      ◇  IS  ◇
   │     ◇ Code Valid ◇
   │      ◇   ?   ◇         Yes          ◯——53
   │        ◇◇◇──────────────────────────┤A
   │         │
   │        ◇◇◇  34
   │      ◇  IS  ◇        No
   │     ◇  Data  ◇──────────◯——52
   │      ◇Available◇
   │        ◇◇◇
   │         │ Yes
   │    ┌─────────┐
   │    │Read Badge│——35
   │    │Enter Data│
   │    │Processor │
   │    └────┬────┘
   │         │
   │    ┌─────────┐
   │    │  Note   │——36
   │    │  Count  │
   │    └────┬────┘
   │         │
   │        ◯——50                      ◯——51
```

50

51

Is
Count>3 — **Yes**

**No**

Is
Badge No.
Stored In
Array — 39 — **Yes**

Is
Badge Count
>Limit — 40 — **Yes**

**No**

**No**

Store
Badge No
In Array — 41

Increment
Badge Status — 42

Initialize
Set Status
Of Badge — 43

*Fig. 6B.*

Increment
Count — 44

Lock In
Next Array — 45

Fig. 7.

_Fig. 8._

60

64 — 16

Out ←

10 Sec.
Timer

62

17

_Fig. 9._

Time

1  2  3  4  5  6  7  8  9  10

Timer Full Cycle

No Incident
Light (i)    0 ┅┅X ──────────────── Y

Low Incident
Light (ii)   0 ┅X ───────────────── Y

High Incident
Light (iii)  0 ───────────────── Y
             X

Sector Of Variation

0 = Restart Point In Time
X = Active Interval
Y = Termination Of Cycle